# EUROPÄISCHE PATENTSCHRIFT

(11) **EP 1 905 310 B1**
(45) Veröffentlichungstag und Bekanntmachung des Hinweises auf die Patenterteilung: **03.12.2008**
(21) Anmeldenummer: 07017928.8
(22) Anmeldetag: 13.09.2007
(51) Int. Cl.: A23D 9/05, A23L 1/30, A23D 9/007

(54) **Mehrfach ungesättigte Fettsäuren enthaltendes Pulver**
Powder containing polyunsaturated fatty acids
Poudre contenant des acides gras polyinsaturés

(30) Priorität: 22.09.2006 EP 06019849
(43) Veröffentlichungstag der Anmeldung: 02.04.2008
(73) Patentinhaber: Cognis IP Management GmbH, 40589 Düsseldorf (DE)
(72) Erfinder: Horlacher, Peter, 89287 Bellenberg (DE); Salacz, Robert, 89250 Senden (DE); Hofmann, Alois, 89257 Illertissen (DE); Gierke, Jürgen, 89257 Illertissen/Betlinshausen (DE)

(56) Entgegenhaltungen:
- EP-A1- 1 598 413
- WO-A-20/04009071
- JP-A- 2000 050 841
- US-A1- 2006 088 574

## Beschreibung

Die vorliegende Erfindung betrifft ein Pulver enthaltend Teilchen, wobei die Teilchen Gummi arabicum, mindestens einen PUFA-Ester und optional mindestens ein Antioxidans enthalten, und wobei das Massenverhältnis der Menge des in den Teilchen enthaltenen Gummi arabicum zur Menge aller in den Teilchen enthaltenen PUFA-Ester 1:1,4 bis 1:0,25 beträgt. Weiterhin betrifft die vorliegende Erfindung ein Verfahren zur Herstellung dieses Pulvers und Nahrungsmittel, die dieses Pulver enthalten.

Mehrfach ungesättigte Fettsäuren (Englisch: polyunsaturated fatty acids, PUFA) werden aus verschiedenen Gründen Lebensmitteln zugesetzt, da sie viele ernährungsphysiologisch vorteilhafte Eigenschaften haben. Häufig werden PUFA in Form ihrer Ester mit Glycerin eingesetzt, es kommen also Triacylglyceride zum Einsatz, wobei mindestens einer der Acylreste ein PUFA-Acylrest ist und im Übrigen Acylreste anderer Fettsäuren vorhanden sind. Es können aber auch andere Ester der PUFA eingesetzt werden, z. B. Ester mit Fettalkoholen.

Als Nahrungsmittel kommen insbesondere Milch, Milchgetränke, Molkegetränke, Joghurtgetränke, Säfte, Margarine und andere Nahrungsmittel in Betracht. Es sollte dabei gewährleistet sein, dass die PUFA-Ester oder die CLA-Ester gegen oxidative Schädigung geschützt sind.

Es ist weiterhin wünschenswert, dass die PUFA-Ester, insbesondere die CLA-Ester den Nahrungsmitteln in ausreichender Menge zugegeben werden können, um die erwünschten vorteilhaften ernährungspsychologischen Eigenschaften (so genannte health benefits) zu erreichten.

Bei wässrigen Lebensmitteln, wie z.B. Säften, stellt es ein Problem dar, dass PUFA-Ester, insbesondere CLA-Ester, lipophile Substanzen sind. Es ist aus dem Stand der Technik bekannt, derartige Lipophile Substanzen als emulgierte Tröpfchen in wässriges Systeme einzubringen.

Dabei werden oft Emulsionen verwendet, die sich zwar einfach in Getränke einarbeiten lassen, aber Emulgatoren, wie z.B.: Lecithin, Polysorbat, Zuckerester, Citrems etc. enthalten.

Diese Emulsionen enthalten sehr oft hohe Mengen an Wasser und zeigen daher nur eine begrenzte Haltbarkeit. Weil das Risiko einer mikrobiologischen Verkeimung besteht, müssen die Produkte unter sterilen Bedingungen abgepackt und oftmals gekühlt gelagert werden. Die Aktivsubstanzgehalte (z.B.: CLA-Ester) sind oftmals begrenzt und liegen oft im Bereich von höchstens 20-30 Gew.-%.

Der Einsatz der oben genannten Emulgatoren hat zudem eine negative Auswirkung auf die sensorische Eigenschaften der Endprodukte (z. B. Nahrungsmittel). Daher wäre es wünschenswert, Produkte zur Verfügung zu haben, die keine der oben genannten lipophilen Emulgatoren benötigen.

JP-A 2000050841 offenbart eine Zusammensetzung enthaltend (a) 60 bis 85 Gewichtsteile einer öligen Flüssigkeit, welche 65 Gew.-% konjugierte Linolsäure (CLA) enthält, und (b) 15 bis 40 Gewichtsteile Gummi arabicum. Weiterhin kann diese Mischung auch Vitamin E enthalten. Dies bedeutet also, dass das Verhältnis von Gummi arabicum zu öliger Flüssigkeit gleich 1:1,5 bis 1:5,67 ist. Diese Pulver lassen sich aber nur schwer gegen oxidative Schädigung stabilisieren. Außerdem müssen diesen Zusammensetzungen Emulgatoren zugesetzt werden, um eine wirksame Verkapselung des CLA-haltigen Öls zu erreichen. Dies bringt die oben beschriebenen Nachteile mit sich, z. B. sensorische Nachteile.

EP-A 1 634 502 (internes Aktenzeichen der Anmelderin Cognis: C 2983) offenbart eine Emulsion enthaltend 0,1 bis 50 Gew.-% konjugierte Linolsäure (CLA) oder Derivate der konjugierten Linolsäure und 0,1 bis 30 Gew.-% pflanzliche Lecithinmischungen und 20 bis 99 Gew.-% Wasser.

WO 01/78531 und die dazu äquivalente Schrift US 6,756,405 offenbaren ein Pulver enthaltend ein CLA-haltiges Öl und einen Träger, wobei der Träger zum Beispiel Stärke, Saccharose oder Laktose sein kann. Das Pulver kann durch Sprühtrocknung hergestellt werden.

EP 1 598 413 A1 offenbart Pulver, die mehrfach ungesättigte Fettsäureester (PUFA-Ester) der Ascorbinsäure und Gummi arabicum enthalten. Die Herstellung des Pulvers erfolgt über eine Sprühtrocknung der mit dem PUFA-ester und Exipienten hergestellten Emulsion. Es wird erwähnt, dass die PUFA-ester und deren Pulver eine verbesserte Stabilität gegen Oxidation aufweisen. Die Pulverzusammensetzung findet Anwendung auch in Nahrungsmitteln. WO 2004/009071 (z.B. Ansprüche 1-34 und Bsp. 15-19) beschreibt Pulver, die CLA-ester enthalten. Gummi arabicum wird nicht erwähnt. Es wird insbesondere auf den hohen Gehalt an CLA-ester in diesen Pulvern hingewiesen, die unter anderem in Nahrungsmitteln Verwendung finden.

US 2006/088574 beschreibt mehrfach ungesättigte Fettsäuren (DHA), die bevorzugt in der Form als Ethylester oder Triglyceride vorliegen können. Es wird ein DHA-Nahrungsergänzungsmittel in Pulverform, das weiter auch Gummi arabicum enthält offenbart.

JP 2000-050841 offenbart ebenfalls CLA-Pulver.

Der vorliegenden Erfindung liegt die Aufgabe zu Grunde PUFA-Ester enthaltende Systeme bereit zu stellen, mittels derer PUFA-Ester Nahrungsmitteln zugesetzt werden können. Dabei sollen die Nachteile der aus dem Stand der Technik bekannten Systeme so weit als möglich vermieden werden.

Diese Aufgabe wird gelöst durch ein Pulver enthaltend Teilchen, wobei die Teilchen Gummi arabicum, mindestens einen PUFA-Ester und optional mindestens ein Antioxidans enthalten, und wobei das Massenverhältnis der Menge des in den Teilchen enthaltenen Gummi arabicum zur Menge aller in den Teilchen enthaltenen PUFA-Ester 1:1,4 bis 1:0,25 beträgt. Dieses Pulver ist ein Gegenstand der vorliegenden Erfindung.

Das angegebene Mengenverhältnis von 1:1,4 bis 1:0,25 ist ein wesentliches Merkmal der vorliegenden Erfindung. Die Einhaltung dieses Mengenverhältnisses ist erforderlich, um die vorteilhaften Eigenschaften des erfindungsgemäßen Pulvers zu gewährleisten. Dies wird durch die Beispiele der vorliegenden Schrift belegt. Wie diese Beispiele zeigen, gewährleistet die Einhaltung des genannten Mengenverhältnisses eine hohe Oxidationsstabilität des erfindungsgemäßen Pulvers. Weiterhin gewährleistet die Einhaltung des genannten Mengenverhältnisses ein gutes Dispergierverhalten des erfindungsgemäßen Pulvers in Wasser. Weiterhin gewährleistet die Einhaltung des genannten Mengenverhältnisses ein gutes Tablettierverhalten des erfindungsgemäßen Pulvers.

Eine besondere Ausführungsform der vorliegenden Erfindung liegt vor, wenn das Massenverhältnis der Menge an Gummi arabicum zur Menge aller vorhandenen PUFA-Ester 1:1,25 bis 1:0,66 beträgt.

Eine weitere besondere Ausführungsform der vorliegenden Erfindung liegt vor, wenn die Teilchen eine mittlere Größe von 100 nm bis 1 mm haben.

Eine weitere besondere Ausführungsform der vorliegenden Erfindung liegt vor, wenn der Gehalt an Acylgruppen, die mindestens zwei C-C-Doppelbindungen enthalten, bezogen auf die Menge aller vorhandenen PUFA-Ester, mindestens 72 Gew.-% beträgt.

Eine weitere besondere Ausführungsform der vorliegenden Erfindung liegt vor, wenn der Gehalt an Acylgruppen, die mindestens zwei C-C-Doppelbindungen enthalten, bezogen auf die Menge aller vorhandenen PUFA-Ester, mindestens 72 Gew.-% beträgt.

Eine weitere besondere Ausführungsform der vorliegenden Erfindung liegt vor, wenn die PUFA-Ester CLA-Ester sind (insbesondere CLA-Ester des Glycerins, die mindestens einen Acylrest enthalten, der sich von CLA ableitet).

Eine weitere besondere Ausführungsform der vorliegenden Erfindung liegt vor, wenn das Antioxidans ausgewählt ist aus der Gruppe bestehend aus einem Tocopherol, Ascorbylpalmitat, Natriumascorbat, Ascorbinsäure, Zitronensäure und einem Salze der genannten Stoffe.

Ein weiterer Gegenstand der vorliegenden Erfindung ist ein Verfahren zur Herstellung des erfindungsgemäßen Pulvers umfassend das Bereitstellen einer Mischung enthaltend Wasser, Gummi arabicum, mindestens einen PUFA-Ester und optional mindestens ein Antioxidans und das Sprühtrocknen dieser Mischung.

Ein weiterer Gegenstand der vorliegenden Erfindung ist die Verwendung des erfindungsgemäßen Pulvers zur Herstellung eines Nahrungsmittels (insbesondere eines Nahrungsmittels ausgewählt aus der Gruppe bestehend aus Milch, Milchgetränke, Molkegetränke, Joghurtgetränke, Säfte und Margarine).

Ein weiterer Gegenstand der vorliegenden Erfindung ist ein Nahrungsmittel enthaltend das erfindungsgemäße Pulver. Dabei ist in einer besonderen Ausführungsform der vorliegenden Erfindung , das Nahrungsmittel ausgewählt aus der Gruppe bestehend aus Milch, einem Milchgetränk, einem Molkegetränk, einem Joghurtgetränk, einem Saft und Margarine.

Ein PUFA-Ester im Sinne der vorliegenden Erfindung ist jeder Ester einer Fettsäure, wobei die Fettsäure mindestens zwei C-C-Doppelbindungen enthält, mit einem Alkohol, insbesondere ein Ester einer Fettsäure, wobei die Fettsäure mindestens zwei C-C-Doppelbindungen enthält, mit Glycerin, wobei mindestens eine OH-Gruppe des Glycerins verestert ist und wobei dieser Ester mit Glycerin mindestens einen Acylrest enthält, der wiederum mindestens zwei C-C-Doppelbindungen enthält. Bevorzugt sind PUFA-Ester, insbesondere solche mit Glycerin, die mindestens einen Acylrest enthalten der sich von CLA ableitet (Solche PUFA-Ester werden CLA-Ester genannt). CLA steht dabei für konjugierte Linolsäure, also für eine Octadecadiensäure, wobei die beiden Doppelbindungen nicht durch eines oder mehrere gesättigte C-Atome getrennt sind, sondern an den C-Atomen Nr. n und n+2 beginnen (n ist eine natürliche Zahl von 2 bis 15). Bevorzugt liegen die Doppelbindungen entweder an den Positionen 9 und 11 (9,11-Octadecadiensäure) oder an den Positionen 10 und 12 (10,12-Octadecadiensäure). Dabei ist an jeder Doppelbindung cis-trans-Isomerie (E-Z-Isomerie) möglich. Die für CLA möglichen Isomere werden durch die angaben c für cis und t für trans und durch Zahlenangaben für die Position der Doppelbindungen bezeichnet, also z. B. c9,t11-CLA.

Bevorzugte PUFA-Ester sind Triacylglyceride, die mindestens einen CLA-Acylrest enthalten und im Übrigen Acylreste anderer Fettsäuren enthalten und bei denen der CLA-Acylrest sich ableitet von c9,t11-Octadecadiensäure oder von 110,c 12-Octedecadiensäure.

Das erfindungsgemäße Pulver vermeidet weitestgehend die Nachteile der aus dem Stand der Technik bekannten Produkte.

Im Vergleich zu JP-A 2000050841 haben die Pulver gemäß der vorliegenden Erfindung zahlreiche Vorteile. Insbesondere lässt sich ein vergleichbarer Gehalt an CLA im Pulver erreichen wie dies in JP-A 2000050841 beschrieben ist, wobei eine verbesserte Oxidationsstabilität erreicht werden kann. Zur Herstellung der Pulver gemäß der vorliegenden Erfindung sind keine Emulgatoren notwendig. Im Vergleich dazu zeigt Beispiel 3 aus JP-A 2000050841, dass entsprechende Produkte ohne Emulgator gemäß der Lehre von JP-A 2000050841 nicht oxidationsstabil sind. Dies kann an Hand der Peroxidentwicklung bei 40 °C im Falle von Beispiel 3 der JP-A 2000050841, Tabellen 1 und 2, erkannt werden. Dieses Beispiel der JP-A 2000050841 zeigt, dass eine wirksame Verkapselung in diesem Fall nur mit Emulgatoren erreicht werden kann.

Außerdem zeigen die erfindungsgemäßen Pulver vorteilhafte Eigenschaften im Vergleich zu den Produkten der JP-A 2000050841, wenn diese in Getränke eingebracht werden. Die Pulver gemäß der vorliegenden Erfindung setzen sich nicht oder nur langsam ab. Im Vergleich dazu zeigen die Produkte gemäß JP-A 2000050841 ein ungünstiges Absetzverhalten.

Ein Vorteil der erfindungsgemäßen Pulver ist es, dass sie beispielsweise durch Sprühtrocknung hergestellt werden können, und dass dabei kein Emulgator verwendet werden muss.

Weiterhin weisen die erfindungsgemäßen Pulver vorteilhafte sensorische Eigenschaften auf. Die Pulver sind geruchlich und geschmacklich einwandfrei.

Weiterhin zeigen die erfindungsgemäßen Pulver ein vorteilhaftes Dispergierverhalten. Die Pulver lassen sich problemlos in wässrige Zubereitungen, wie z.B. Fruchtsäfte, Sportgetränke, Milch usw. einrühren und danach weiterverarbeiten.

Weiterhin ist es ein Vorteil der erfindungsgemäßen Pulver, dass sie sehr gute Fließeigenschaften aufweisen und nur eine geringe Verklumpungsneigung aufweisen.

Das erfindungsgemäße Pulver kann insbesondere durch Sprühtrocknung hergestellt werden. Auch andere Verfahren zur Herstellung sind möglich. So kann das erfindungsgemäße Pulver beispielsweise durch Wirbelschichtgranulation oder durch Sprühgranulation oder durch Kontakttrocknung oder auch durch Sprühkühlung hergestellt werden. Weiterhin ist eine Herstellung durch Coating-Prozesse oder durch Extrusionsverfahren möglich. Eine Herstellung unter Nutzung von so genannten Jet-Dispersem möglich.

Antioxidantien, die in den erfindungsgemäßen Pulvern eingesetzt werden können, sind alle bekannten Oxidantien. Insbesondere können eingesetzt werden Tocopherole oder Gemische aus Tocopherolen, Ascorbylpalmitat, Na-Ascorbat, Ascorbinsäure, Zitronensäure oder Salze der genannten Stoffe.

### Beispiele

1400 g Wasser wurden auf ca. 70 °C erhitzt. Es wurden 319 g Gummi Arabicum (TS 94 %) ("TS 94%" bedeutet einen Trockensubstanzgehalt von 94 Gew.-%; wie andere Kohlenhydrate auch weist Gummi arabicum einen gewissen Gehalt an Restfeuchte auf) unter Rühren zugegeben. Anschließend wurden 300 g Tonalin® TG 80 (CLA-Triglycerid der Firma Cognis Deutschland GmbH & Co. KG, Monheim, Deutschland) zugegeben. Der Ansatz wurde anschließend zweistufig homogenisiert (220 / 30 bar) und sprühgetrocknet (unter Verwendung eines Sprühtrockners der Firma APV, Typ: Anhydro Typ 3S).

| | |
|---|---|
| Sprühbedingungen: | |
| Temperatur am Einlass: | 185 °C |
| Temperatur am Auslass: | 90 °C |
| Zerstäuber: | 24000 UpM |
| Teilchengröße: | d90 < 2,5 µm |

Im Vergleich zu einer Emulsion zeigte ein nach dieser Vorschrift hergestelltes Pulver sensorische Vorteile in der Form, dass bis zu der 3-fachen Menge an CLA in ein Getränk eingearbeitet werden konnte, ohne dass sensorische Beeinträchtigungen auftraten. Wenn zusätzlich Aromastoffe eingesetzt wurden, konnten noch größere Mengen CLA eingearbeitet werden. Emulsionen, wie sie aus dem Stand der Technik bekannt sind, hingegen, müssen aromatisiert werden, da sie sonst aus sensorischen Gründen nur in sehr geringen Mengen eingesetzt werden können.

**Tabelle: Gehalt an CLA-Triglycerid in verschiedenen Getränken bei Einsatz von wahlweise einer Emulsion oder eines Pulvers (ohne sensorische Beeinträchtigung; % sind Gew.-%)**

| | CLA-Emulsion | CLA-Pulver |
|---|---|---|
| Multivitamin-Saft | 0,2 % | 0,5 % |
| Bananen-Nektar | 0,3 % | 1,0 % |
| Pfirsich-Nektar | 0,1 % | 0,75 % |
| Gemüse-Saft | 0,2 % | 1,0 % |

Zusätzlich haben Emulsionen die Eigenschaft, in der Anwendung das farbliche Erscheinungsbild von Getränken aufzuhellen, was negativ ist. Diese Eigenschaft ist bei einem erfindungsgemäßen Pulver nur schwach ausgeprägt.

### Weitere Beispiele

Die folgenden 4 Pulver (AH 65 bis AH 68) wurden durch Sprühtrocknung hergestellt und geprüft.

| | AH 65 | AH 66 | AH 67 | AH 68 |
|---|---|---|---|---|
| Tonalin® TG 80 | 20% | 58% | 70% | 80% |
| Gummi arabicum 94% TS | 80% | 42% | 30% | 20% |
| Ascorbylpalmitat | 500ppm | 500ppm | 500ppm | 500ppm |

Tonalin® TG 80 ist ein CLA-Tricglycerid (80 Gew.-% CLA bezogen auf alle Fettsäureester) Der Gehalt an freiem, d.h. nicht matrixverkapselten Oberflächenfett wurde bestimmt.

Es wurden die folgenden Werte gefunden:
AH 65: 0,37%
AH 66: 18,3 %
AH 67: 29,5 %
AH 68: 46,3 %

Mit zunehmendem Gehalt an freiem Oberflächenöl geht die oxidative Stabilität des Produktes verloren. Man erkannte hier, dass bereits AH 66 grenzwertig ist.

Das Einrührverhalten in Wasser wurde untersucht.

Hierzu wurde das Pulver (Menge berechnet auf 2g Tonalin® TG 80 auf 11 Wasser) mit Hilfe eines Magnetrührers bei Raumtemperatur eingerührt. Anschließend wurde die Dispersion 1 Stunde ohne Rühren stehen gelassen und bewertet.

### Ergebnis:

- AH 65:: einrührbar, stabil, keine Aufrahmung
- AH 66:: einrührbar, stabil, minimale Aufrahmung
- AH 67:: einrührbar, nicht stabil; Aufrahmung, Ringbildung
- AH 68:: einrührbar, nicht stabil, starke Aufrahmung und Ringbildung

Das Tablettierverhalten wurde untersucht.

Aus den Pulvern wurden Tabletten mit zwei unterschiedlichen Drücken (p1=1t/cm² und p2=2t/cm²) hergestellt und dann beurteilt.

### Ergebnis:

- AH 65:: p1 in Ordnung, kein Ausölen feststellbar, p2 in Ordnung, kein Ausölen feststellbar
- AH 66:: p 1 in Ordnung, kein Ausölen feststellbar, p2 noch in Ordnung, minimales Ausölen feststellbar
- AH 67:: p1 noch in Ordnung, minimales Ausölen feststellbar, p2 keine Herstellung möglich, Produkt ölt sofort aus
- AH 68:: p1 keine Herstellung möglich, Produkt ölt sofort aus, p2 keine Herstellung möglich, Produkt ölt sofort aus

## Patentansprüche

1. Ein Pulver enthaltend Teilchen, wobei die Teilchen
Gummi arabicum,
mindestens einen PUFA-Ester und
optional mindestens ein Antioxidans enthalten,
und wobei das Massenverhältnis der Menge des in den Teilchen enthaltenen Gummi arabicum zur Menge aller in den Teilchen enthaltenen PUFA-Ester 1:1,4 bis 1:0,25 beträgt.

2. Das Pulver nach Anspruch 1, wobei das Massenverhältnis der Menge an Gummi arabicum zur Menge aller vorhandenen PUFA-Ester 1:1,25 bis 1:0,66 beträgt.

3. Das Pulver nach einem der Ansprüche 1 bis 2, wobei die Teilchen eine mittlere Größe von 100 nm bis 1 mm haben.

4. Das Pulver nach einem der Ansprüche 1 bis 3, wobei der Gehalt an Acylgruppen, die mindestens zwei C-C-Doppelbindungen enthalten, bezogen auf die Menge aller vorhandenen PUFA-Ester, mindestens 72 Gew.-% beträgt.

5. Das Pulver nach einem der Ansprüche 1 bis 4, wobei die PUFA-Ester CLA-Ester sind.

6. Das Pulver nach einem der Ansprüche 1 bis 5, wobei das Antioxidans ausgewählt ist aus der Gruppe bestehend aus einem Tocopherol, Ascorbylpalmitat, Natriumascorbat, Ascorbinsäure, Zitronensäure und einem Salze der genannten Stoffe.

7. Ein Verfahren zur Herstellung des Pulvers nach einem der Ansprüche 1 bis 6 umfassend
• das Bereitstellen einer Mischung enthaltend Wasser, Gummi arabicum, mindestens einen PUFA-Ester und optional mindestens ein Antioxidans und
• das Sprühtrocknen dieser Mischung.

8. Die Verwendung des Pulvers nach einem der Ansprüche 1 bis 6 zur Herstellung eines Nahrungsmittels.

9. Ein Nahrungsmittel enthaltend das Pulver nach einem der Ansprüche 1 bis 6.

10. Das Nahrungsmittel nach Anspruch 9, wobei das Nahrungsmittel ausgewählt ist aus der Gruppe bestehend aus Milch, einem Milchgetränk, einem Molkegetränk, einem Joghurtgetränk, einem Saft und Margarine.

## Claims

1. Powder containing particles which contain gum arabic,
at least one PUFA ester and,
optionally, at least one antioxidant,
the ratio by weight of the quantity of gum arabic contained in the particles to the quantity of all PUFA esters present in the particles being from 1:1.4 to 1:0.25.

2. Powder according to Claim 1, wherein the ratio by weight of the quantity of gum arabic to the quantity of all PUFA esters present is from 1:1.25 to 1:0.66.

3. Powder according to Claim 1 or 2, wherein the particles have a mean size of 100 nm to 1 mm.

4. Powder according to any of Claims 1 to 3, wherein the content of acyl groups containing at least two C-C double bonds, based on the quantity of all PUFA esters present, is at least 72% by weight.

5. Powder according to any of Claims 1 to 4, wherein the PUFA esters are CLA esters.

6. Powder according to any of Claims 1 to 5, wherein the antioxidant is selected from the group consisting of a tocopherol, ascorbyl palmitate, sodium ascorbate, ascorbic acid, citric acid and a salt of these substances.

7. Process for the production of the powder according to any of Claims 1 to 6, comprising
• providing a mixture containing water, gum arabic, at least one PUFA ester and, optionally, at least one antioxidant and
• spray drying this mixture.

8. Use of the powder according to any of Claims 1 to 6 for the production of a food.

9. Food containing the powder according to any of Claims 1 to 6.

10. Food according to Claim 9, wherein the food is selected from the group consisting of milk, a milk beverage, a whey beverage, a yoghurt beverage, a juice and margarine.

## Revendications

1. Poudre contenant des particules, ces particules contenant :
- de la gomme arabique,
- au moins un ester de PUFA,
- éventuellement, au moins un antioxydant, et
le rapport en masse de la quantité de gomme arabique contenue dans les particules à la quantité de tous les esters de PUFA contenus dans les particules est de 1/1,4 à 1/0,25.

2. Poudre selon la revendication 1,
**caractérisée en ce que**
le rapport en masse de la quantité de gomme arabique à la quantité de tous les esters de PUFA présents est de 1/1,25 à 1/0,66.

3. Poudre selon une des revendications 1 à 2, dont les particules ont une taille moyenne de 100 nm à 1 mm.

4. Poudre selon une des revendications 1 à 3, dont la teneur en groupes acyles, qui contiennent au moins deux doubles liaisons C-C, rapportée à la quantité de tous les esters de PUFA présents, est au moins de 72 % en poids.

5. Poudre selon une des revendications 1 à 4,
**caractérisée en ce que**
les esters de PUFA sont des esters de CLA.

6. Poudre selon une des revendications 1 à 5, dans laquelle l'antioxydant est choisi dans le groupe constitué d'un tocophérol, du palmitate d'ascorbyle, de l'ascorbate de sodium, de l'acide ascorbique, de l'acide citrique et d'un sel des substances citées.

7. Procédé de préparation de la poudre selon une des revendications 1 à 6, comportant les étapes suivantes :
- préparation d'un mélange contenant de l'eau, de la gomme arabique, au moins un ester de PUFA, et, éventuellement, au moins un antioxydant, et
- séchage par pulvérisation de ce mélange.

8. Utilisation de la poudre selon une des revendications 1 à 6 pour la production d'un produit alimentaire.

9. Produit alimentaire contenant la poudre selon une des revendications 1 à 6.

10. Produit alimentaire selon la revendication 9, ce produit alimentaire étant choisi dans le groupe constitué du lait, d'une boisson lactée, d'une boisson à base de petit lait, d'une boisson à base de yaourt, d'un jus et de margarine.
